# EUROPÄISCHE PATENTSCHRIFT

(11) **EP 2 764 812 B1**
(45) Veröffentlichungstag und Bekanntmachung des Hinweises auf die Patenterteilung: **08.07.2015**
(21) Anmeldenummer: 13154994.1
(22) Anmeldetag: 12.02.2013
(51) Int. Cl.: A47L 11/30, A47L 11/293, A47L 11/40, G05D 1/00

(54) **Reinigungsroboter**
Cleaning robot
Robot de nettoyage

(43) Veröffentlichungstag der Anmeldung: 13.08.2014
(73) Patentinhaber: Hako GmbH, 23843 Bad Oldesloe (DE)
(72) Erfinder: Klüssendorff, Jan Helge, 23556 Lübeck (DE); Forouher, Dariush, 23566 Lübeck (DE); Bavendiek, Rainer, 21465 Wentorf (DE); Zimny, Axel, 22927 Grosshansdorf (DE)
(74) Vertreter: UEXKÜLL & STOLBERG

(56) Entgegenhaltungen:
- DE-A1- 19 614 916
- DE-A1-102011 004 319
- DE-B3-102007 015 552

## Beschreibung

Die vorliegende Erfindung betrifft einen Bodenreinigungsroboter mit einem Gehäuse, mit einem Fahrwerk mit einem Antrieb zur Bewegung des Bodenreinigungsroboters in einer Fahrtrichtung über eine zu reinigende Oberfläche, mit einer Reinigungseinrichtung, die eingerichtet ist, mit der zu reinigenden Oberfläche einzugreifen, mit einer Steuereinheit und mit einer ersten Messvorrichtung zur dreidimensionalen Abstandsmessung, die dazu eingerichtet ist, den Abstand der ersten Messvorrichtung von einer Vielzahl von Oberflächenelementen innerhalb eines ersten Raumwinkels zu erfassen, der ausgehend von der ersten Messvorrichtung aufgespannt wird, wobei die Steuereinheit dazu eingerichtet ist, den Bodenreinigungsroboter mit Hilfe einer Darstellung der zu reinigende Oberfläche über die zu reinigende Oberfläche zu führen und die zu reinigende Oberfläche zu reinigen.

Ein Bodenreinigungsroboter - im Folgenden auch kurz Reinigungsroboter oder Roboter - ist eine Bodenreinigungsmaschine, die dazu angepasst worden ist, sich autonom über eine zu reinigende Oberfläche zu bewegen und diese zu reinigen. Im Gegensatz zu herkömmlichen Bodenreinigungsmaschinen ist der Roboter nicht darauf angewiesen, dass er aktiv von einem Bediener über die zu reinigende Oberfläche geführt wird. Der Roboter bestimmt selber, entlang welcher Route er über die zu reinigende Oberfläche fährt und wie er diese reinigt. Hierzu benötigt der Roboter offensichtlich eine Vielzahl von Sensoren, mit der er seine Umgebung und genauer gesagt die Abstände zu seiner Umgebung umfassen kann.

Aus der DE 10 2011 004 319 A1 ist ein Reinigungsroboter bekannt, der ein Fahrwerk mit einem Antrieb zur Bewegung des Reinigungsroboters über eine zu reinigende Oberfläche aufweist. Der Reinigungsroboter hat zudem eine Reinigungseinrichtung, und weist eine Vielzahl von Sensoren zur Abstandsmessung auf. Es handelt sich dabei sowohl um Infrarot- als auch Ultraschallsensoren, mit denen der punktuelle Abstand zu einem Oberflächenelement wie einer Wand oder einem Einrichtungsgegenstand bestimmt wird.

Im Folgenden wird unter einem Oberflächenelement zunächst ein Abschnitt der zu reinigenden Oberfläche verstanden, von der der Abstand bestimmt wird. Es kann sich aber auch um einen Abschnitt einer Oberfläche eines Gegenstandes, der sich auf der zu reinigenden Oberfläche befindet, oder beispielsweise um einen Abschnitt einer Oberfläche einer Wand handeln, die die zu reinigende Oberfläche begrenzt.

Der aus der DE 10 2011 004 319 A1 bekannte Reinigungsroboter verwendet dabei lediglich solche Vorrichtungen zur Abstandsmessung, mit denen jeweils der Abstand zu nur einem Oberflächenelement bestimmt werden kann, das innerhalb des Raumwinkels liegt, in dem die Vorrichtung zur Abstandsmessung einen Abstand bestimmen kann. Daher ist in nachteilhafter Weise eine Vielzahl von Vorrichtungen zur Abstandsmessung notwendig, die nur mit großem Aufwand ausgewertet werden können, um daraus Fahranweisungen für den Reinigungsroboter zu generieren. Zudem wird die Umgebung des Reinigungsroboters nur mit einem sehr groben Raster erfasst, da die Anzahl der Sensoren beschränkt ist. Eine exakte Führung des Roboters ist daher nur eingeschränkt möglich.

Ein weiterer Bodenreinigungsroboter ist aus der U.S. 6,667,592 B2 bekannt. Der Reinigungsroboter weist eine Mehrzahl von Vorrichtungen zur Abstandsmessung auf, die beispielsweise als Lasersensoren oder als Ultraschallsensoren ausgebildet sind. Im Gegensatz zu Ultraschallsensoren, die die Umgebung um den Reinigungsroboter herum nur punktweise erfassen können, erlauben Lasersensoren die Erfassung der Abstände zu der Umgebung in einer Ebene, die beispielsweise parallel oder unter einen Winkel zu der zu reinigenden Oberfläche verläuft. Mit anderen Worten erlauben Lasersensoren eine Erfassung von Abständen in einer Dimension. Hindernisse in der Umgebung, die außerhalb der erfassten Ebene liegen, werden von dem Lasersensor jedoch nicht erfasst.

Aus der U.S. 8,150,650 B2 ist schließlich ein Reinigungsroboter bekannt, der einen optischen Sensor aufweist, mit dem Bilder der Umgebung des Reinigungsroboters aufgezeichnet werden. Die Informationen, die sich den Bildern entnehmen lassen, werden mit Informationen von Koppelsensoren verglichen, um die Position von sogenannten Landmarken zu entdecken. Auf diese Weise kann sich der Reinigungsroboter über eine bekannte zu reinigende Oberfläche bewegen. Die Verwendung von optischen Sensoren ohne eigene aktive Beleuchtung ist jedoch nachteilhaft, da eine ausreichende Ausleuchtung der Räume notwendig ist, in der sich der Reinigungsroboter bewegt. Eine aktive Beleuchtung im sichtbaren Spektralbereich ist jedoch nachteilhaft, da hierdurch Personen geblendet werden können.

Es ist daher die Aufgabe der vorliegenden Erfindung, einen Bodenreinigungsroboter bereitzustellen, der zumindest einige der aus dem Stand der Technik bekannten Nachteile vermeidet. Insbesondere soll der Bodenreinigungsroboter dazu in der Lage sein, sich über eine unbekannte zu reinigende Oberfläche zu bewegen und dabei nicht auf eine ausreichende Beleuchtung der zu reinigenden Oberfläche angewiesen zu sein.

Diese Aufgabe wird durch einen Bodenreinigungsroboter gelöst, der eine zweite Messvorrichtung zur dreidimensionalen Abstandsmessung aufweist, die dazu eingerichtet ist, den Abstand der zweiten Messvorrichtung von einer Vielzahl von Oberflächenelementen innerhalb eines zweiten Raumwinkels zu erfassen, der ausgehend von der zweiten Messvorrichtung aufgespannt wird, wobei die erste Messvorrichtung und die zweite Messvorrichtung derart ausgerichtet sind, dass die Fahrtrichtung durch den ersten Raumwinkel verläuft und der zweite Raumwinkel versetzt zu dem ersten Raumwinkel ist, und wobei die Steuereinheit dazu ausgestaltet ist, die Darstellung der zu reinigenden Oberfläche aufgrund der mit den Messvorrichtungen erfassten Abstände von Oberflächenelementen zu generieren und/oder zu aktualisieren.

Ein Bodenreinigungsroboter gemäß der vorliegenden Erfindung umfasst ein Gehäuse, in dem eine Vielzahl von Komponenten angeordnet werden kann. Darunter fallen verschiedene Sensoreinrichtungen, Motoren, Schmutzbehälter, Frischwassertank, Schmutzwassertank und andere notwendige Elemente, die von Bodenreinigungsmaschinen aus dem Stand der Technik bekannt sind. Unterhalb des Gehäuses ist ein Fahrwerk angeordnet, das einen Antrieb zur Bewegung des Bodenreinigungsroboters entlang einer Fahrtrichtung über eine zu reinigende Oberfläche umfasst. Unter der Fahrtrichtung des Roboters wird im Folgenden die Richtung verstanden, die parallel zu der Tangente der Bewegungsbahn des Roboters auf der zu reinigenden Oberfläche in dessen Vorwärtsfahrtrichtung verläuft.

Bei dem Bodenreinigungsroboter gemäß der vorliegenden Erfindung kann der Antrieb nicht nur für eine Vorwärts- oder Rückwärtsbewegung sorgen, sondern mit ihm kann auch die Richtung, in der der Roboter sich bewegt, bestimmt werden. Dabei kann die Richtungsänderung durch Räder erfolgen, die um eine Achse drehbar sind, die senkrecht zu der zu reinigenden Oberfläche verläuft, oder durch den Antrieb mehrerer Räder mit unterschiedlichen Geschwindigkeiten oder in unterschiedlicher Rotationsrichtungen.

Der Reinigungsroboter weist weiterhin, vorzugsweise unterhalb des Gehäuses, eine Reinigungseinrichtung auf, die dazu eingerichtet ist, mit der zu reinigenden Oberfläche einzugreifen. Es kann sich bei dieser Reinigungseinrichtung beispielsweise um eine trocken arbeitende Reinigungseinrichtung wie eine Kehrwalze oder auch um eine Nassreinigungseinrichtung handeln. Derartige Reinigungseinrichtungen sind aus dem Stand der Technik hinlänglich bekannt.

Weiterhin ist eine Steuereinheit vorgesehen, die dazu eingerichtet ist, die Steuerung des Bodenreinigungsroboters zu übernehmen. Die Steuereinheit kann beispielsweise die Aktivierung und Deaktivierung der Reinigungseinrichtung durchführen, ist aber insbesondere dazu ausgestaltet, den Bodenreinigungsroboter über die zu reinigende Oberfläche zu führen, sodass diese gereinigt werden kann. Hierzu verwendet die Steuereinheit eine Darstellung der zu reinigenden Oberfläche. Bei dieser Darstellung kann es sich beispielsweise um eine Karte handeln, in der die Abmessungen der zu reinigenden Oberfläche sowie die Position und Abmessungen darin enthaltener Einrichtungsgegenstände und Hindernisse eingetragen sind. Diese Darstellung kann beispielsweise in einem Speicher in der Steuereinheit hinterlegt sein. Hierbei können beliebige Dateiformate zur Speicherung verwendet werden. Der Begriff der Steuereinheit ist weit zu fassen. Er ist nicht auf eine einzige, räumliche zusammenhängende Anordnung von Elektronikelementen beschränkt, sondern umfasst sämtliche und insbesondere auch räumlich verteilte Komponenten des Bodenreinigungsroboters, die zumindest einen Teil der Steuerung von Teilen des Bodenreinigungsroboters übernehmen.

Weiterhin sind eine erste und eine zweite Messvorrichtung zur dreidimensionalen Abstandsmessung vorgesehen, die dazu eingerichtet sind, den Abstand der Messvorrichtungen gleichzeitig von einer Vielzahl von Oberflächenelementen unter einem ersten und einem zweiten Raumwinkel zu erfassen. Eine dreidimensionale Abstandsmessung ist die Messung des Abstandes von einer Vielzahl von Oberflächenelementen innerhalb eines Raumwinkels, wobei an zumindest ein Oberflächenelement in dem Raumwinkel mehr als zwei Oberflächenelemente direkt angrenzen, deren Abstände zu der Messvorrichtung gemessen werden können. Somit kann eine derartige Messvorrichtung nicht nur eine linienförmige Anordnung von Oberflächenelementen erfassen, sondern auch eine flächenförmige. Ferner unterscheiden sich die erste und zweite Messvorrichtung beispielsweise von Ultraschallsensoren dadurch, dass diese innerhalb des von ihnen betrachteten Raumwinkels nur über ein einziges, der Größe des Raumwinkels entsprechendes Oberflächenelement mitteln und nicht gleichzeitig den jeweiligen Abstand zu mehreren Oberflächenelementen erfassen.

Die erste und die zweite Messvorrichtung zur dreidimensionalen Abstandsmessung weisen vorzugsweise eine Lichtquelle, eine Kamera und eine Auswerteeinrichtung auf. Die Lichtquelle kann Licht mit einer Wellenlänge in einem Bereich zwischen 780 nm und 3.000 nm und vorzugsweise zwischen 780 und 1.200 nm emittieren. Das von der Lichtquelle emittierte Licht beleuchtet innerhalb des jeweiligen Raumwinkels angeordnete Oberflächenelemente mit einem Raster. Die Kamera zeichnet innerhalb des Raumwinkels von den Oberflächenelementen reflektiertes Licht auf, das von der Lichtquelle emittiert worden ist. Die Auswerteeinrichtung ist dazu eingerichtet, aus dem von den Oberflächenelementen reflektiertem Raster den Abstand der Bodenreinigungsmaschine zu den Oberflächenelementen zu bestimmen.

Eine derartige Ausgestaltung der Messvorrichtungen zur dreidimensionalen Abstandsmessung ist vorteilhaft, da Licht zur Abstandsmessung verwendet wird, das in einem für das menschliche Auge nicht sichtbaren Wellenlängenbereich emittiert wird. Damit werden Personen, die sich im Bereich des Reinigungsroboters aufhalten, nicht von der Lichtquelle geblendet oder gestört. Es ist jedoch auch denkbar, andere Messvorrichtungen zur dreidimensionalen Abstandsmessung zu verwenden, die beispielsweise auf stereoskopischen Verfahren oder "Time-of-Flight"-Messungen beruhen, so lange diese Messvorrichtungen dazu geeignet sind, den Abstand der Messvorrichtung zu einer Vielzahl von Oberflächenelementen unter einem Raumwinkel zu erfassen bzw. eine dreidimensionale Abstandsmessung durchzuführen.

Der erste und der zweite Raumwinkel bzw. die erste und die zweite Messvorrichtung zur dreidimensionalen Abstandsmessung sind derart ausgerichtet, dass die Fahrtrichtung durch den ersten Raumwinkel verläuft und der zweite Raumwinkel versetzt zu dem ersten Raumwinkel ist. Die Ausrichtung der ersten Messvorrichtung stellt sicher, dass der Bereich um die Fahrtrichtung erfasst wird, also der Bereich, in dem unmittelbar eine Kollision mit einem Hindernis droht. Die zweite Messvorrichtung erfasst den Bereich weiter entfernt von der Fahrtrichtung, sodass hier weitere Informationen über die Abmessungen der zu reinigenden Oberfläche ermittelt werden können.

Die Steuereinheit verwendet die von der ersten und der zweiten Messvorrichtung aufgezeichneten Daten, um die Darstellung der zu reinigenden Oberfläche zu aktualisieren und/oder zu generieren. Fährt der Reinigungsroboter über eine unbekannte zu reinigende Oberfläche, so werden die von den Messvorrichtungen aufgezeichneten Abstände zu Oberflächenelementen dazu verwendet, erstmals eine Darstellung der zu reinigenden Oberfläche zu erzeugen, aufgrund derer die Steuereinheit den Reinigungsroboter über die zu reinigende Oberfläche führen kann. Fährt der Reinigungsroboter über eine bereits bekannte Oberfläche, so werden die Daten zum einen genutzt, um der Steuererung zu ermöglichen, die Position des Reinigungsroboters innerhalb der exisitierenden Darstellung zu bestimmen, und zum anderen dazu verwendet, um die Darstellung der zu reinigenden Oberfläche zu überprüfen und gegebenenfalls zu aktualisieren, falls sich beispielsweise Gegenstände auf der Oberfläche verschoben haben. Die Steuereinheit kann somit jeder Zeit auf eine aktuelle Darstellung der zu reinigenden Oberfläche in einem Bereich zurückgreifen, die innerhalb des ersten und/oder des zweiten Raumwinkels liegt.

Die Verwendung zweier Messvorrichtungen zur dreidimensionalen Abstandsmessung ist vorteilhaft, da sich auf diese Weise ein großer kombinierter Raumwinkel erfassen lässt, in dem die Abstände zu einer Vielzahl von Oberflächenelementen gemessen werden können und deren Position bestimmt werden kann. Die Darstellung der zu reinigenden Oberfläche wird somit in dem kombinierten Raumwinkel laufend aktualisiert. Dabei dienen die von den Messvorrichtungen erfassten Abstände nicht nur dazu, Hindernisse zu entdecken und zu umfahren, sondern auch zur Orientierung auf einer vorher erstellten Darstellung des Raumes.

Durch die Überwachung eines großen Raumwinkels kann insbesondere erreicht werden, dass der Reinigungsroboter besonders nah an Wänden und auch in Ecken reinigen kann. Bei aus dem Stand der Technik bekannten Bodenreinigungsrobotern muss ein Mindestabstand zu Wänden und anderen Hindernissen eingehalten werden, damit die Messvorrichtungen zur Abstandmessung ausreichend Informationen erfassen können, um eine Orientierung im Raum zu ermöglichen und die zu reinigende Oberfläche hinreichend genau zu erfassen. Durch die Erweiterung des erfassten Raumwinkels kann der erfindungsgemäße Bodenreinigungsroboter beispielsweise auch in Fahrtrichtung den Mindestabstand für die Erfassung von Hindernissen der ersten Messvorrichtung zur Abstandsmessung unterschreiten, da die zweite Messvorrichtung zur Abstandsmessung weiterhin Daten in ausreichendem Umfang zur Aktualisierung der Karte und zur Orientierung auf der zu reinigenden Oberfläche liefert.

Der erfindungsgemäße Reinigungsroboter kann neben der automatischen bzw. autonomen Reinigung von Oberflächen in einer beispielhaften Ausführungsform auch manuell bedient werden. Mit anderen Worten kann der Reinigungsroboter in einen Modus versetzt werden, in dem die Steuerung von einem Bediener übernommen wird. Der Bediener kann dazu entweder wie bei einer aus dem Stand der Technik bekannten handgeführten Bodenreinigungsmaschine hinter dem Bodenreinigungsroboter hergehen oder aber auf dem Bodenreinigungsroboter sitzen, wie dies von Aufsitzbodenreinigungsmaschinen ebenfalls aus dem Stand der Technik bekannt ist.

In einer bevorzugten Ausführungsform überragt die Reinigungseinrichtung das Gehäuse senkrecht zur Fahrtrichtung und parallel zu der zu reinigenden Oberfläche zu einer ersten Seite hin oder schließt bündig mit dieser Seite ab. Die zweite Messvorrichtung zur dreidimensionalen Abstandsmessung ist derart ausgerichtet, dass der zweite Raumwinkel auf der von der ersten Seite wegweisenden Seite des Bodenreinigungsroboters liegt, außerhalb von dessen Fahrspur angeordnet ist und die Fahrspur den zweiten Raumwinkel nicht schneidet.

Die Reinigungseinrichtung des Reinigungsroboters ist in dieser bevorzugten Ausführungsform derart angeordnet, dass sie an einer ersten Seite aus dem Gehäuse herausragt bzw. seitlich bündig mit dem Gehäuse abschließt. Diese Anordnung ist für sich genommen bereits vorteilhaft, da besonders nah an Wänden, Kanten und anderen Objekten seitlich vorbeigefahren und gereinigt werden kann, ohne dass die Gefahr besteht, dass das Gehäuse des Bodenreinigungsroboters beschädigt wird. Um einen möglichst großen Anteil der zu reinigenden Oberfläche auch tatsächlich zu reinigen, wird der Bodenreinigungsroboter vorzugsweise mit möglichst geringem Abstand zu seiner ersten Seite an Wänden und andere Objekten vorbeifahren.

Die zweite Messvorrichtung zur dreidimensionalen Abstandsmessung ist in dieser bevorzugten Ausführungsform so ausgerichtet, dass der zweite Raumwinkel auf der von der ersten Seite weg weisenden Seite des Bodenreinigungsroboters liegt und ferner die Fahrspur nicht mehr erfasst. Unter dem Fahrweg oder der Fahrspur des Bodenreinigungsroboters sollen hier der Bereich der zu reinigenden Oberfläche verstanden werden, der durch die Projektion des Gehäuses auf die zu reinigende Oberfläche bei einer Bewegung des Roboters entlang seiner momentanen Fahrtrichtung festgelegt ist. Mit Objekten, die auf oder oberhalb der Fahrspur angeordnet sind, würde das Gehäuse des Bodenreinigungsroboters folglich bei einer geradlinigen Bewegung entlang der Fahrtrichtung kollidieren. Die erste Messvorrichtung ist daher vorzugsweise so ausgerichtet, dass sie Oberflächenelemente in Fahrtrichtung und im Bereich der Fahrspur des Bodenreinigungsroboters erfasst.

Die zweite Messvorrichtung ist in dieser Ausführungsform weiterhin so ausgerichtet, dass mit ihr Abstände zu Oberflächenelementen erfasst werden können, die auf der von der ersten Seite wegweisenden Seite des Fahrwegs bzw. des Bodenreinigungsroboters angeordnet sind. Die zweite Messvorrichtung erfasst also keine Abstände zu Oberflächenelementen, die der Bodenreinigungsroboter an seiner ersten Seite passiert, wenn er die Fahrt ohne Richtungsänderung fortsetzt, sondern an der gegenüberliegenden Seite. Abstände zu Oberflächenelemente auf der ersten Seite des Fahrwegs bzw. des Bodenreinigungsroboters können beispielsweise durch die erste Messvorrichtung oder durch weitere, entsprechend ausgerichtete Messvorrichtungen erfasst werden.

Diese Anordnung der zweiten Messvorrichtung ist besonders vorteilhaft, da - wie oben bereits dargestellt - mit der ersten Seite vornehmlich möglichst nah an Wänden und anderen Objekten vorbei gefahren wird, um eine umfassende Reinigung zu ermöglichen. Der Bodenreinigungsroboter wird somit seine Fahrtrichtung vornehmlich in eine von der ersten Seite wegweisende Richtung ändern. Dieser Bereich wird mit der erfindungsgemäßen Anordnung der zweiten Messvorrichtung erfasst, sodass die Wendemöglichkeit jederzeit vollständig von der Steuereinheit beurteilt werden kann. Diese Aufgabe kann nicht von der ersten Messvorrichtung alleine übernommen werden, da der von der ersten Messvorrichtung erfassbare Raumwinkel zu klein ist.

Neben der Erfassung von Hindernissen dienen die Messvorrichtungen auch zur Orientierung und Lokalisierung des Bodenreinigungsroboters im Raum. Die Wiedererkennung von Hindernissen erlaubt es der Steuereinheit, die Position des Reinigungsroboters innerhalb der Karte und auch seine Fahrtrichtung und damit Orientierung zu bestimmen. Bei vielen gängigen Messvorrichtungen zur dreidimensionalen Abstandsmessung muss jedoch ein Mindestabstand eingehalten werden, damit der Abstand gemessen werden kann. Fährt der Reinigungsroboter direkt an einer Wand vorbei, so wird der Mindestabstand regelmäßig unterschritten und die Messvorrichtung liefert keinerlei Werte, die zur Orientierung und/oder Lokalisierung im Raum verwendet werden können. Die Ausrichtung der zweiten Messvorrichtung zur dreidimensionalen Abstandsmessung weg von der ersten Seite erhöht folglich die Wahrscheinlichkeit, dass zusätzliche Objekte erfasst werden können und die Lokalisierung und Orientierung im Raum verbessert wird.

In weiteren beispielhaften Ausführungsformen weist der Bodenreinigungsroboter eine dritte Messvorrichtung zur dreidimensionalen Abstandsmessung auf, die dazu eingerichtet ist, den Abstand der Messvorrichtung gleichzeitig von einer Vielzahl von Oberflächenelementen zu bestimmen, und die derart ausgerichtet ist, dass lediglich Abstände zu Oberflächenelementen erfasst werden können, die auf der ersten Seite des Bodenreinigungsroboters und vorzugsweise außerhalb der Fahrspur angeordnet sind. Hierdurch lässt sich eine besonders detaillierte Darstellung der zu reinigenden Oberfläche erstellen und der Abstand zu Oberflächenelementen an der ersten Seite besonders exakt erfassen. Eine dritte Messvorrichtung ist insbesondere bei Ausführungsformen eines Bodenreinigungsroboters vorteilhaft, dessen Reinigungseinrichtung das Gehäuse auch zu der von der ersten Seite wegweisenden Seite überragt. Derartige Reinigungsroboter können mit beiden Seiten gleichermaßen nah an Hindernisse heran fahren, um die zu reinigende Oberfläche zu reinigen. Die dritte Messvorrichtung liefert somit ergänzende Aufnahmen der zu reinigenden Oberfläche, wenn der Reinigungsroboter mit der von der ersten Seite wegweisenden Seite den Mindestabstand der zweiten Messvorrichtung zu Hindernissen unterschreitet und ermöglicht somit eine gründliche Reinigung der Oberfläche ohne das Abstriche bei der Qualität der Darstellung der zu reinigenden Oberfläche hingenommen werden müssen. Außerdem weist ein derartig ausgestatteter Bodenreinigungsroboter eine große Flexibilität bei der Wahl des Weges über die zu reinigende Oberfläche auf.

In einem weiteren bevorzugten Ausführungsbeispiel weist der Bodenreinigungsroboter eine vierte Messvorrichtung zur dreidimensionalen Abstandsmessung auf, die dazu eingerichtet ist, den Abstand der Messvorrichtung gleichzeitig von einer Vielzahl von Oberflächenelementen zu bestimmen, und die derart ausgerichtet ist, dass sie Oberflächenelemente erfasst, die in einer der Fahrtrichtung entgegengesetzten Richtung bzw. hinter dem Bodenreinigungsroboter angeordnet sind. Diese Anordnung ist besonders vorteilhaft, wenn der Bodenreinigungsroboter zumindest auch kurze Strecken rückwärts fahren soll. Die vierte Messvorrichtung würde zudem die Genauigkeit der Lokalisierung des Bodenreinigungsroboters erhöhen, sowie die Erfassung von Hindernissen auf der zu reinigenden Oberfläche verbessern.

In einer weiteren bevorzugten Ausführungsform sind die Lichtquelle der ersten Messvorrichtung zur dreidimensionalen Abstandsmessung und die Lichtquelle der zweiten Messvorrichtung zur dreidimensionalen Abstandsmessung gepulst. Die Lichtquelle der ersten Messvorrichtung ist derartig mit der Lichtquelle der zweiten Messvorrichtung korreliert, dass die Lichtquelle der ersten Messvorrichtung dann kein Licht emittiert, wenn die Lichtquelle der zweiten Messvorrichtung Licht emittiert. Auf diese Weise kann sichergestellt werden, dass jeweils nur eine Lichtquelle zurzeit Licht emittiert. Damit wird verhindert, dass sich die Raster der Lichtquellen überlagern und fehlerhafte Abstandsmessungen zustande kommen.

Es ist weiterhin bevorzugt, dass der erste und der zweite Raumwinkel horizontal, d.h. parallel zu der Ebene der zu reinigenden Oberfläche, zueinander benachbart sind und nicht überlappen. Dies ist vorteilhaft, da die Abstände zu einer Vielzahl von Oberflächenelementen in einem besonders großen kombinierten Raumwinkel überwacht werden können und auch bei nicht gepulsten und korrelierten Lichtquellen keine Gefahr der Überlagerung der Raster besteht.

Es ist weiterhin bevorzugt, dass der Bodenreinigungsroboter eine Reinigungseinrichtung aufweist, die zumindest teilweise in Fahrtrichtung vor dem Fahrwerk angeordnet ist, und dass die Reinigungseinrichtung eine Abdeckung aufweist, die das Gehäuse parallel zu einer zu reinigenden Oberfläche in der Fahrtrichtung und/oder senkrecht zu der Fahrtrichtung überragt.

Insbesondere kann die Reinigungseinrichtung unterhalb der Abdeckung eine oder mehrere rotierende Reinigungsbürsten aufweisen.

Hierbei ist es weiter bevorzugt, wenn auf der Abdeckung der Reinigungseinrichtung eine Unterfahrschutzvorrichtung vorgesehen. Die Unterfahrschutzvorrichtung weist eine Vorrichtung zur Abstandsmessung auf, in bevorzugter Weise einen Ultraschallsensor, die im Wesentlichen senkrecht zu der zu reinigenden Oberfläche ausgerichtet ist und mit der der Abstand der Unterfahrschutzvorrichtung zu einem Oberflächenelement erfasst werden kann, das sich in Fahrtrichtung vor dem Gehäuse des Bodenreinigungsroboters befindet, wobei die Unterfahrschutzvorrichtung dazu eingerichtet ist, ein Stoppsignal an die Steuereinheit zu senden.

Bei der erfindungsgemäßen Unterfahrschutzvorrichtung, die nur vorzugsweise auf der Abdeckung der Reinigungseinrichtung angebracht ist, handelt es sich um ein selbstständig erfinderisches Konzept, das auch an anderen Bodenreinigungsrobotern oder auch an herkömmlichen Bodenreinigungsmaschinen mit einem Fahrwerk und einer daran angebrachten Reinigungseinrichtung zum Einsatz kommen kann. Der Unterfahrschutz wird vorzugsweise von einem nach oben gerichteten Ultraschallsensor oder einem Infrarotsensor gebildet. Dieser kann auf der Abdeckung des Bürstenkopfes des Reinigungsroboters angeordnet sein. In alternativen Ausführungsformen ist die Vorrichtung zur Abstandsmessung an einem anderen Element des Reinigungsroboters angeordnet. Dabei ist entscheidend, dass dieses Element möglichst knapp über der zu reinigenden Oberfläche ist und das Gehäuse des Reinigungsroboters in eine Richtung parallel zur zu reinigenden Oberfläche überragt.

Mit dem Unterfahrschutz können Oberflächenelemente erfasst werden, die oberhalb der zu reinigenden Oberfläche in den Fahrweg des Reinigungsroboters hineinragen. Diese werden von bodennahen Vorrichtungen zur Abstandsmessung oder von Vorrichtungen zur Abstandsmessung die vornehmlich dazu eingerichtet sind, die zu reinigende Oberfläche zu erfassen, nicht miterfasst.

Erfasst die Vorrichtung zur Abstandsmessung des Unterfahrschutzes ein Oberflächenelement, mit dem der Bodenreinigungsroboter kollidieren bzw. zusammenstoßen würde, so sendet der Unterfahrschutz in bevorzugter Weise ein Stoppsignal an die Steuereinheit, worauf die Steuereinheit den Bodenreinigungsroboter sofort stoppt. Der Unterfahrschutz stellt somit einen Notstoppmechanismus dar, der Kollisionen mit in den Fahrweg des Bodenreinigungsroboters hineinragenden Objekten verhindert.

Es ist weiterhin bevorzugt, dass mit der Unterfahrschutzvorrichtung der Abstand eines Oberflächenelementes erfasst werden kann, das bei einer Annäherung des Bodenreinigungsroboters zumindest zeitweise innerhalb eines Bereiches des ersten oder zweiten Raumwinkels angeordnet ist, indem der Abstand zu der ersten oder zweiten Messvorrichtung geringer ist, als ein Mindestabstand, den die erste oder zweite Messvorrichtung bestimmen kann. Sind die erste und die zweite Messvorrichtung zur dreidimensionalen Abstandsmessung an einem erhöhten Punkt der Bodenreinigungsmaschine angeordnet und weisen nach unten auf die zu reinigende Oberfläche, dann werden oftmals Oberflächenelemente, die in den Fahrweg des Reinigungsroboters hineinragen, erst kurz von einer Kollision mit dem Reinigungsroboter in den ersten oder zweiten Raumwinkel eintreten. Die erste und die zweite Messvorrichtung zur dreidimensionalen Abstandsmessung sind jedoch oftmals auf einen bestimmen Bereich beschränkt, indem sie einen Abstand erfassen können. Mit anderen Worten können sie den Abstand nur erfassen, wenn dieser weiter entfernt ist als ein Mindestabstand. Wenn das in den Fahrweg des Reinigungsroboters hineinragende Oberflächenelement innerhalb des Mindestabstands in den ersten oder zweiten Raumwinkel hineinragt, so kann es nicht mehr von der ersten oder zweiten Messvorrichtung zur dreidimensionalen Abstandsmessung erfasst werden. Um eine Kollision dennoch zu vermeiden, ist die Unterfahrschutzvorrichtung derart angeordnet, dass sie diese Oberflächenelemente erfasst und der Steuereinheit den Abstand des Oberflächenelementes bereitstellt, so dass diese den Reinigungsroboter um das Oberflächenelement herumführen kann.

In einer weiteren bevorzugten Ausführungsform weist der Bodenreinigungsroboter eine oder mehrere Seitenabstandsmessungsvorrichtungen auf, die vorzugsweise auf der Abdeckung der Reinigungseinrichtung angeordnet sind, wobei jede Seitenabstandsmessungsvorrichtung einen Abstand der Reinigungseinrichtung senkrecht zur Fahrtrichtung und parallel zu der zu reinigenden Oberfläche von einem Oberflächenelement bestimmen kann. Die Steuereinheit ist dazu ausgestaltet, die Darstellung der zu reinigenden Oberfläche aufgrund der mit dem einen oder den mehreren Seitenabstandsmessungsvorrichtungen erfassten Abstände zu generieren und/oder zu aktualisieren.

Auch bei der Seitenabstandsmessungsvorrichtung handelt es sich um ein eigenständiges erfinderisches Konzept, das auch bei herkömmlichen Bodenreinigungsmaschinen mit einem Fahrwerk und einer daran angebrachten Reinigungseinrichtung angewandt werden kann. Die Seitenabstandsmessungsvorrichtung ist auf dem tiefstmöglichen Punkt angeordnet, der über das Gehäuse des Bodenreinigungsroboters in einer Ebene parallel zu der zu reinigenden Oberfläche und senkrecht zur Fahrtrichtung hinausragt. Die Seitenabstandsmessungsvorrichtung ist vorteilhaft, da auf diese Weise besonders nah an Wände oder andere Begrenzungen der zu reinigenden Oberfläche herangefahren werden kann, sodass auch in den Ecken und Kanten eine gründliche Reinigung der zu reinigenden Oberfläche möglich ist. Aus dem Stand der Technik bekannte Bodenreinigungsmaschinen können oftmals nur bis zu einem gewissen Abstand an Wände und Kanten heran reinigen, sodass stets ungereinigte Bereiche zurückbleiben.

Die Anordnung der Seitenabstandsmessungsvorrichtung auf der Abdeckung der Reinigungsvorrichtung erscheint auf den ersten Blick nachteilhaft, da der Reinigungseinrichtung deutlich stärkeren Vibrationen und Erschütterungen ausgesetzt ist, als beispielsweise das Gehäuse des Reinigungsroboters. Dieser Nachteil wird jedoch durch den geringen Abstand ausgeglichen, in dem die Seitenabstandsmessungsvorrichtung über der zu reinigenden Oberfläche angeordnet ist. Durch die bodennahe Anordnung kann eine Vorrichtung zu Abstandsmessung verwendet werden, beispielsweise ein Ultraschallsensor oder ein Infrarotsensor, die einen besonderen schmalen Öffnungskegel aufweist bzw. die ein Oberflächenelement in einem besonders schmalen Raumwinkel erfassen kann. Dieser Öffnungskegel wird vorzugsweise so ausgerichtet, dass er erst außerhalb der größten von dem Sensor erfassbaren Distanz und noch bevorzugter gar nicht auf die zu reinigende Oberfläche trifft.

Die erfindungsgemäße Seitenabstandsmessungsvorrichtung kann somit Oberflächenelemente erfassen, die nur wenig über dem zu reinigenden Boden angeordnet sind, wie beispielsweise Fußleisten an Wänden, sodass der Bodenreinigungsroboter besonders nah an Wände heran fahren kann. Dabei vermeidet sie die Nachteile von Vorrichtungen zur Abstandsmessung, die einen weiten Öffnungswinkel haben bzw. einen auf den Boden zuweisenden Öffnungswinkel aufweisen. Derartige Vorrichtungen erfassen oftmals fälschlicher Weise bereits äußerst flache Erhebungen auf der zu reinigenden Oberfläche oder sogar Vertiefungen wie beispielsweise Fugen, die die Bodenreinigungsmaschine tatsächlich problemlos überfahren kann und verhindern somit eine vollständige Reinigung der gesamten zu reinigenden Oberfläche. Da die erfindungsgemäße Seitenabstandsmessungsvorrichtung vorzugsweise die zu reinigende Oberfläche nicht erfasst, wird dieses im Stand der Technik regelmäßig auftretende Problem gelöst.

Es ist weiterhin bevorzugt, dass der Reinigungsroboter ein Gyroskop aufweist, wobei mit dem Gyroskop eine Drehung des Bodenreinigungsroboters um eine Achse erfasst werden kann, die senkrecht zu der zu reinigenden Oberfläche verläuft. Diese Achse wird auch als die Hochachse des Reinigungsroboters bezeichnet.

Es ist weiterhin bevorzugt, dass das Fahrwerk einen integrierten Encoder aufweist, mit dem die zurückgelegte Wegstrecke ermittelt werden kann. In einer weiteren bevorzugten Ausführungsform ist die Steuereinheit dazu eingerichtet, eine Position des Bodenreinigungsroboters in der Darstellung der zu reinigenden Oberfläche aufgrund der mit dem Gyroskop erfassten Drehungen und dem mit dem Encoder ermittelten Wegstrecken zu bestimmen.

Die vorliegende Erfindung wird im Folgenden anhand einer ein bevorzugtes Ausführungsbeispiel darstellenden schematischen Zeichnung erläutert. Die Zeichnung zeigt in
- Fig. 1: eine perspektivische Ansicht eines Ausführungsbeispiels eines erfindungsgemäßen Bodenreinigungsroboters,
- Fig. 2: eine Seitenansicht des Ausführungsbeispiels eines erfindungsgemäßen Bodenreinigungsroboters,
- Fig. 3: eine Draufsicht auf das Ausführungsbeispiel eines erfindungsgemäßen Bodenreinigungsroboters und
- Fig. 4: eine Vorderansicht des Ausführungsbeispiels eines Bodenreinigungsroboters.

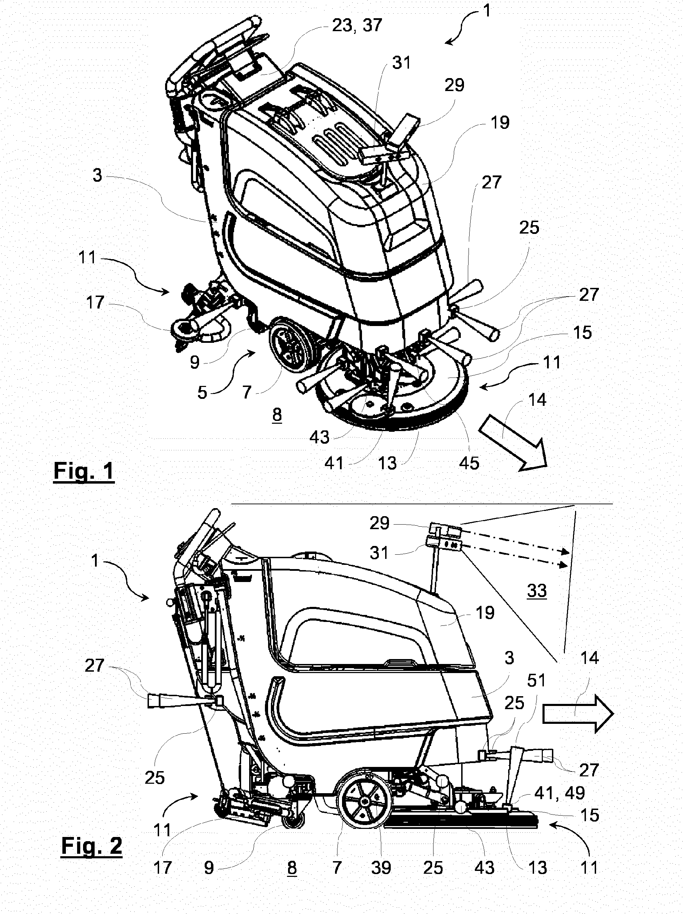

In den Figuren 1 bis 4 ist ein Ausführungsbeispiel eines Bodenreinigungsroboters oder Reinigungsroboters 1 dargestellt. Der Reinigungsroboter 1 umfasst ein Gehäuse 3, das auf einem Fahrwerk 5 angeordnet ist. Das Fahrwerk 5 weist einen Antrieb auf, der mit den Rädern 7 verbunden ist. Die Räder 7 sind unabhängig voneinander um eine Achse antreibbar, die parallel zu einer zu reinigenden Oberfläche 8 verläuft. Um die Bewegungsrichtung des Reinigungsroboters 1 zu ändern, können die Räder 7 mit unterschiedlichen Geschwindigkeiten oder Drehrichtungen angetrieben werden. Ferner sind zwei weitere Räder 9 drehbar um eine Hochachse gehaltert. Die Hochachse verläuft dabei senkrecht zu der zu reinigenden Oberfläche 8.

Unterhalb des Gehäuses 3 ist zudem eine Reinigungseinrichtung 11 angeordnet, die das Gehäuse 3 zu einer ersten Seite 12 hin und in Fahrtrichtung 14 überragt. In diesem Zusammenhang wird unter der Fahrtrichtung 14 des Bodenreinigungsroboters 1 die Richtung verstanden, die parallel zu der Tangente der Bewegungsbahn des Bodenreinigungsroboters 1 auf der zu reinigenden Oberfläche 8 in dessen Vorwärtsfahrtrichtung verläuft.

Die Reinigungseinrichtung 11 ist als Bürstenkopf 13, 15 mit einer drehend angetriebene Reinigungsbürste 13 und einer Abdeckung 15 ausgebildet. Der Bürstenkopf 13, 15 und damit die Reinigungseinrichtung 11 sind in Fahrtrichtung 14 vor dem Fahrwerk 5 und teilweise vor dem Gehäuse 3 angeordnet und können relativ zum Gehäuse 3 bzw. dem Fahrwerk 5 in der Höhe verfahren werden, um den Bürstenkopf 13, 15 und damit die Reinigungseinrichtung 11 wahlweise mit der zu reinigenden Oberfläche 8 in Eingriff zu bringen. Die Reinigungseinrichtung 11 umfasst zudem eine Aufnahmevorrichtung 17 in Form eines Saugfu-ßes 17, mit der Schmutz und Schmutzwasser von der zu reinigenden Oberfläche 8 aufgenommen werden können. Die von der Aufnahmevorrichtung 17 aufgenommene Flüssigkeit wird in einem schwenkbar im Gehäuse gehalterten Schmutzwassertank 19 gesammelt. Um die Reinigungswirkung des Bodenreinigungsroboters 1 zu verbessern, kann über einen innerhalb des Bürstenkopfes 13, 15 angeordneten Wasserzulauf Wasser, eine Reinigungsflüssigkeit oder eine Mischung aus Wasser und einer Reinigungsflüssigkeit aufgebracht werden.

Der Bodenreinigungsroboter 1 weist zudem eine schematisch dargestellte Steuereinheit 23 auf, die dazu eingerichtet ist, den Bodenreinigungsroboter 1 mit Hilfe einer Darstellung der zu reinigenden Oberfläche 8 zu führen. Die Steuereinheit 23 kann zu diesem Zweck die Fahrgeschwindigkeit und die Fahrtrichtung 14 des Reinigungsroboters 1 sowie den Einsatz der Reinigungseinrichtung 11 steuern. Die Steuereinheit 23 kann beispielsweise die Geschwindigkeit und die Richtung bestimmen, mit der sich die Räder 7 drehen und damit ggf. die Fahrtrichtung 14 ändern.

Allerdings kann der Bodenreinigungsroboter 1 auch mit Hilfe eines am hinteren Teil des Gehäuses 3 angebrachten Griffs 24 von Hand gesteuert werden, wobei im Bereich des Griffs 24 Kontrollelemente für den Antrieb vorgesehen sind, sodass der Roboter auch wie eine herkömmliche Bodenreinigungsmaschine betrieben werden kann.

An dem Gehäuse 3 sind eine Mehrzahl von Ultraschall- und Infrarotsensoren 25 angeordnet. Jeder dieser Sensoren 25 kann den Abstand zu einem Oberflächenelement bestimmen, dass sich in dem Raumwinkel 27 befindet, der von dem Sensor 25 erfasst wird. Die von den Sensoren 25 erfassten Abstände zu Oberflächenelementen werden an die Steuereinheit 23 übertragen, die diese bei der Berechnung des weiteren Fahrweges berücksichtigt.

Der Bodenreinigungsroboter 1 weist zudem eine erste und eine zweite Messvorrichtung 29, 31 zur dreidimensionalen Abstandsmessung auf. Die erste Messvorrichtung 29 ist dafür eingerichtet, gleichzeitig den Abstand der Messvorrichtung 29 von einer Vielzahl von Oberflächenelementen unter einem ersten Raumwinkel 33 zu erfassen bzw. zu bestimmen. Die zweite Messvorrichtung 31 ist entsprechend dafür eingerichtet, den Abstand der Messvorrichtung 31 von einer Vielzahl von Oberflächenelementen unter einem zweiten Raumwinkel 35 zu erfassen.

Unter einer dreidimensionalen Abstandsmessung wird in diesem Zusammenhang die Messung des Abstandes von einer Vielzahl von Oberflächenelementen einer Fläche verstanden, wobei an zumindest ein Oberflächenelement der Fläche mehr als zwei Oberflächenelemente direkt angrenzen, deren Abstand zu der Messvorrichtung gemessen werden kann. Somit kann eine derartige Messvorrichtung nicht nur eine linienförmige Anordnung von Oberflächenelementen erfassen, sondern auch eine flächenförmige Anordnung.

In diesem bevorzugten Ausführungsbeispiel weist jede Messvorrichtung 29, 31 eine Lichtquelle auf, die beispielsweise Licht mit einer Wellenlänge von ungefähr 830 nm emittiert. Es ist jedoch durchaus denkbar, eine Lichtquelle zu verwenden, die Licht mit anderen Wellenlängen im Bereich des Infraroten emittiert. Das von den Lichtquellen emittierte Licht beleuchtet die in dem jeweiligen Raumwinkel 33, 35 angeordneten Oberflächenelemente mit einem Raster und in diesem Fall einem Punktraster. Das Raster kann beispielsweise durch eine Folie erzeugt werden. Die Verwendung einer Lichtquelle im Infraroten ist vorteilhaft, da der Reinigungsroboter nicht auf eine ausreichende externe Beleuchtung der zu reinigenden Oberfläche 8 angewiesen ist, gleichzeitig aber auch kein Licht emittiert, dass einen Menschen blenden könnte.

Die Messvorrichtungen 29, 31 weisen gemäß diesem Ausführungsbeispiel zudem ein Kamera auf, mit der von Oberflächenelementen in dem jeweiligen Raumwinkel 33, 35 reflektiertes Licht, das zuvor von der jeweiligen Lichtquelle emittiert worden ist, aufgezeichnet werden kann. Eine Auswerteeinrichtung, die ebenfalls in der Messvorrichtung 29, 31 vorgesehen ist, berechnet aus dem von den Oberflächenelementen reflektiertem Raster den Abstand der Messvorrichtungen 29, 31 zu den Oberflächenelementen. Eine derartige Messvorrichtung 29, 31 wird beispielsweise unter der Bezeichnung Kinect® von Microsoft® vertrieben.

Die Lichtquellen der ersten Messvorrichtung 29 und die Lichtquelle der zweiten Messvorrichtung 31 sind vorzugsweise gepulst, und die Lichtquelle der ersten Messvorrichtung 29 ist derartig mit der Lichtquelle der zweiten Messvorrichtung 31 korreliert, dass die Lichtquelle der ersten Messvorrichtung 29 dann kein Licht emittiert, wenn die Lichtquelle der zweiten Messvorrichtung 31 Licht emittiert. Auf diese Weise kann sichergestellt werden, dass jeweils nur eine Lichtquelle zurzeit Licht emittiert. Damit wird zuverlässig verhindert, dass sich die Raster der Lichtquellen überlagern und fehlerhafte Abstandsmessungen zustande kommen.

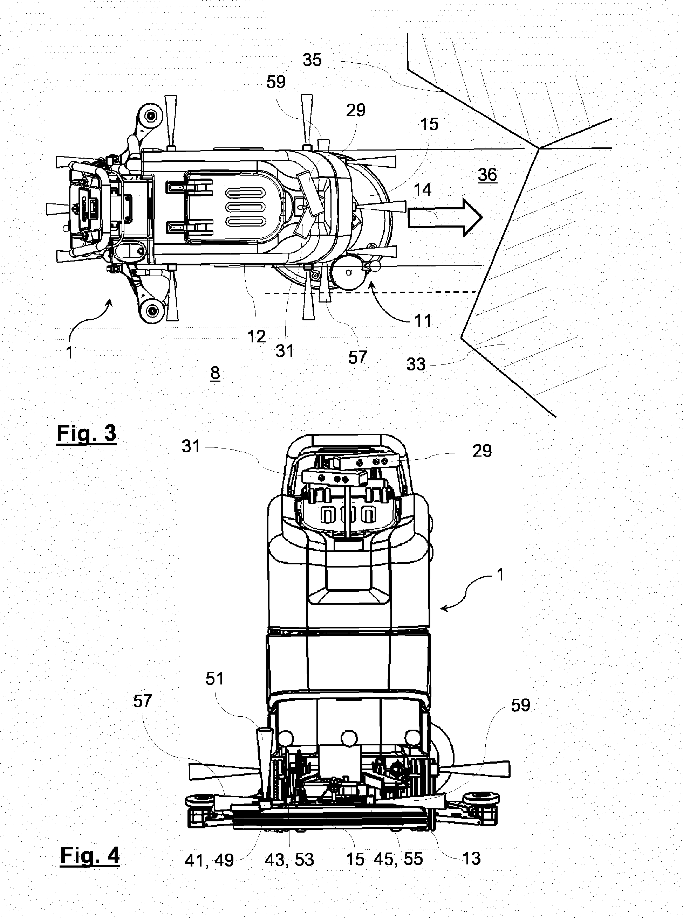

Der erste und der zweite Raumwinkel 33, 35 weisen senkrecht zu der zu reinigenden Oberfläche 8 die gleiche Ausdehnung auf. Mit anderen Worten sind die Messvorrichtungen 29, 31 bei identischer vertikaler Ausdehnung der Raumwinkel 33, 35 unter dem gleichen Winkel zu der zu reinigenden Oberfläche 8 geneigt. Die Raumwinkel 33, 35 sind horizontal benachbart, überlappen jedoch wie in Figur 3 in Draufsicht zu erkennen ist nicht, und sind damit versetzt zueinander. Auf diese Weise interferieren die Raster der ersten und der zweiten Messvorrichtung 29, 31 auf vorteilhafte Weise nicht, d.h. das von der ersten Messvorrichtung 29 erzeugte Raster wird nicht von der zweiten Messvorrichtung 31 erfasst und umgekehrt. Wie des Weiteren aus Figur 3 zu erkennen ist, ist die erste Messvorrichtung 29 derart angeordnet, dass die Fahrtrichtung 14 durch den ersten Raumwinkel 33 verläuft. Die Messvorrichtungen 29, 31 können zudem beispielsweise jeweils eine weitere Kamera zur Aufzeichnung von Strahlung im sichtbaren Spektralbereich aufweisen. Die Daten dieser Kameras könnten unter anderem dazu verwendet werden, um Hindernisse genauer zu klassifizieren.

Die erste Messvorrichtung 29 ist somit derart ausgerichtet, dass sie Oberflächenelemente erfasst, die in der Fahrspur 36 des Bodenreinigungsroboters 1 sowie auf einer ersten Seite 12 des Bodenreinigungsroboters 1 angeordnet sind. Unter dem Fahrweg oder der Fahrspur 36 des Bodenreinigungsroboters 1 sollen hier der Bereich der zu reinigenden Oberfläche 8 verstanden werden, der durch die Projektion des Gehäuses 3 auf die zu reinigende Oberfläche 8 bei einer geradlinigen Bewegung des Roboters 1 entlang seiner momentanen Fahrtrichtung 14 festgelegt ist.

Die zweite Messvorrichtung 31 ist ferner derart ausgerichtet, dass sie nur Oberflächenelemente der zu reinigenden Oberfläche 8 erfasst, die außerhalb der Fahrspur 36 und auf der von der ersten Seite 12 wegweisenden Seite des Bodenreinigungsroboters 1 angeordnet sind. Insbesondere ist die zweite Messvorrichtung 31 derart ausgerichtet, dass der zweite Raumwinkel 35 auf der von der ersten Seite 12 wegweisenden Seite des Bodenreinigungsroboters 1 liegt, außerhalb von dessen Fahrspur 36 angeordnet ist und die Fahrspur 36 den zweiten Raumwinkel 35 nicht schneidet.

Die Raumwinkel 33, 35, unter denen die erste und die zweite Messvorrichtung 29, 31 die zu reinigende Oberfläche 8 erfassen, sind senkrecht zu der zu reinigenden Oberfläche 8 so ausgerichtet, dass in den Fahrweg 36 hinreichende Hindernisse auf der gesamte Höhe des Reinigungsroboters 1 erfasst werden, um Kollisionen mit solchen Hindernissen zu vermeiden, aber möglichst keine Hindernisse erfasst werden, unter denen der Reinigungsroboter 1 hindurch fahren kann. Die Messvorrichtungen 29, 31 sind weiterhin so ausgerichtet, dass die zu reinigende Oberfläche 8 mit der höchsten Auflösung in einem Abstand von ungefähr einem bis drei Metern in Fahrtrichtung 14 vor dem Reinigungsroboter 1 erfasst werden. Die Anordnung der ersten und der zweiten Messvorrichtung 29, 31 erlaubt somit eine besonders detailreiche Erfassung der Umgebung des Bodenreinigungsroboters 1. Die zweite Messvorrichtung dient dabei insbesondere dazu, den Wendebereich der Reinigungsroboters 1 zu erfassen. Aufgrund der Anordnung der Reinigungsvorrichtung 11 fährt dieser vornehmlich mit der ersten Seite 12 nah an Wänden oder anderen Objekten vorbei und wendet somit zwangsläufig vornehmlich in Richtung der der ersten Seite 12 gegenüberliegenden Seite.

Die Steuereinheit 23 ist dazu ausgestaltet, den Reinigungsroboter 1 mit Hilfe einer Darstellung der zu reinigenden Oberfläche 8 über diese zu führen und die Oberfläche 8 zu reinigen. Die Darstellung der Oberfläche 8 kann beispielsweise in Form einer Karte erfolgen. Diese Karte kann dem Reinigungsroboter 1 vor dem Reinigungsvorgang zur Verfügung gestellt werden. In diesem Fall verwendet der Reinigungsroboter 1 die von den Messvorrichtungen 29, 31 zur dreidimensionalen Abstandsmessung und den Sensoren 25 erfassten Abstände zu Oberflächenelementen dazu, die Darstellung der Oberfläche 8 laufend zu aktualisieren, um diese an Veränderungen der Oberfläche anzupassen. Alternativ kann die Darstellung der Oberfläche 8 auch selbsttätig von der Steuereinheit 23 aus den von den Messvorrichtungen 29, 31 erfassten Abständen und Positionen im Raum erzeugt oder generiert werden. In jedem Fall kann die Karte in einem beliebigen Dateiformat in einem Speicher der Steuereinheit 23 hinterlegt sein.

Die Steuereinheit 23 weist ein Gyroskop 37 auf, mit dem Drehungen des Reinigungsroboters 1 um die Hochachse gemessen werden können. Zudem weisen die Räder 7 einen Encoder 39 auf, der die Anzahl der Umdrehungen der Räder 7 und damit die Entfernung misst, die der Reinigungsroboter 1 zurückgelegt hat. Die Steuereinheit 23 ist dazu eingerichtet, aus den mit dem Gyroskop 37 und dem Encoder 39 aufgezeichneten Daten zusammen mit denen mit den Messvorrichtungen 29, 31 erfassten Abständen eine Position und Orientierung des Bodenreinigungsroboters 1 in der Darstellung der zu reinigenden Oberfläche 8 zu bestimmen.

Der Bodenreinigungsroboter 1 weist zudem eine Unterfahrschutzvorrichtung 41 und zwei Seitenabstandsmessungsvorrichtungen 43, 45 auf. Die Unterfahrschutzvorrichtung 41 und die Seitenabstandsmessungsvorrichtung 43, 45 stellen eigenständige erfinderische Konzepte dar. Beide Konzepte sind nicht auf die Anwendung bei Bodenreinigungsrobotern beschränkt, sondern können allgemein bei Bodenreinigungsmaschinen mit einem Fahrwerk, ggf. mit einem Antrieb, und einer am Fahrwerk angebrachten Reinigungseinrichtung zur Anwendung kommen.

Auf der Abdeckung 15 der als Bürstenkopf 13, 15 ausgeführten Reinigungsvorrichtung 11 ist zudem eine Unterfahrschutzvorrichtung 41 angeordnet. Diese umfasst eine Vorrichtung zur Abstandsmessung in Form eines Ultraschallsensors 49, der im Wesentlichen senkrecht zu der zu reinigenden Oberfläche 8 ausgerichtet ist. Die Ausrichtung des Ultraschallsensors 49 bezieht sich dabei auf die Richtung, in der der Ultraschallsensor 49 ein Ultraschallfeld 51 emittiert. Der Ultraschallsensor 49 ist an einem Punkt der Bodenreinigungsmaschine angeordnet, der sich parallel zur Fahrtrichtung 14 des Bodenreinigungsroboters 1 vor dem Gehäuse 3 befindet.

Der Ultraschallsensor 49 erfasst Oberflächenelemente, die sich im Fahrweg 36 des Reinigungsroboters 1 befinden. Die Unterfahrschutzvorrichtung 41 kann mit der Steuereinrichtung 23 verbunden sein, die den von dem Ultraschallsensor 49 erfassten Abstand eines Oberflächenelements in die Darstellung der zu reinigenden Oberfläche 8 einbindet und beim Führen des Bodenreinigungsroboter 1 berücksichtigt.

Bei dem Unterfahrschutz 41 handelt es sich um ein eigenständiges erfinderisches Konzept, der auch an anderen Bodenreinigungsrobotern oder Bodenreinigungsmaschinen eingesetzt werden kann, die beispielsweise keine das Gehäuse 3 überragende Abdeckung 15 des Bürstenkopfes 13, 15 aufweisen. Der Unterfahrschutz 41 wird in diesem Fall auf einem Element des Bodenreinigungsroboters angeordnet, das möglichst nah an der zu reinigenden Oberfläche 8 angeordnet ist und das Gehäuse 3 in einer Ebene parallel zu der zu reinigenden Oberfläche 8 überragt.

Der Bodenreinigungsroboter 1 weist zudem auf der Abdeckung 15 des Bürstenkopfes 13, 15 zwei Seitenabstandsmessungsvorrichtung 43, 45 auf. Jede Seitenabstandsmessungsvorrichtung 43, 45 umfasst eine Vorrichtung zur Bestimmung eines Abstandes von einem Oberflächenelementes in Form eines Ultraschallsensors 53, 55. Die Ultraschallsensoren 53, 55 sind derart ausgerichtet, dass das von ihnen in einem Öffnungskegel 57, 59 emittierte Ultraschallfeld im Wesentlichen parallel zu der zu reinigenden Oberfläche 8 und senkrecht zur Fahrtrichtung 14 emittiert wird. Die Ultraschallsensoren 53, 55 können somit den Abstand des Bodenreinigungsroboters 1 zu einer parallel zur Fahrtrichtung 14 verlaufenden Oberfläche wie beispielsweise einer Wand oder einem Regal bestimmen. Da die Ultraschallsensoren 53, 55 auf der Abdeckung 15 des Bürstenkopfes 13, 15 angeordnet sind, befinden sie sich nur wenige Zentimeter über der zu reinigenden Oberfläche 8 und eignen sich auf besonders vorteilhafte Weise, um den Bodenreinigungsroboter 1 besonders nah an Wände und beispielsweise Fußleisten heranzuführen und eine gründliche und vollständige Reinigung der Oberfläche 8 zu gewährleisten.

Durch die bodennahe Anordnung kann eine Vorrichtung zu Abstandsmessung 53, 55 verwendet werden, die einen besonderen schmalen Öffnungskegel 59 aufweist bzw. die ein Oberflächenelement in einem besonders schmalen Raumwinkel erfassen kann. Diese Öffnungskegel 57, 59 sind so ausgerichtet, dass sie erst außerhalb der größten von dem Sensor erfassbaren Distanz und noch bevorzugter gar nicht auf die zu reinigende Oberfläche 8 treffen. Die erfindungsgemäße Seitenabstandsmessungsvorrichtung 43, 45 kann somit Oberflächenelemente erfassen, die nur wenig über dem zu reinigenden Boden 8 angeordnet sind, wie beispielsweise Fußleisten an Wänden, sodass der Bodenreinigungsroboter 1 besonders nah an Wände heran fahren kann. Dabei vermeidet sie die Nachteile von Vorrichtungen zur Abstandsmessung, die einen weiten Öffnungswinkel haben bzw. einen auf den Boden zuweisenden Öffnungswinkel aufweisen. Derartige Vorrichtungen erfassen oftmals fälschlicher Weise bereits äußerst flache Erhebungen auf der zu reinigenden Oberfläche 8 oder sogar Vertiefungen wie beispielsweise Fugen, die die Bodenreinigungsmaschine tatsächlich problemlos überfahren kann und verhindern somit eine vollständige Reinigung der gesamten zu reinigenden Oberfläche 8.

Auch bei den Seitenabstandsmessungsvorrichtungen 43, 45 handelt es sich um ein eigenständiges erfinderisches Konzept, das auch an anderen Bodenreinigungsrobotern oder Bodenreinigungsmaschinen eingesetzt werden kann. Die Seitenabstandsmessung wird durch die Anordnung der Seitenabstandsmessungsvorrichtungen 43, 45 direkt auf dem Bürstenkopf 13, 15 gekennzeichnet, der die Bodenreinigungsmaschine bzw. den Reinigungsroboter 1 selbst zumeist senkrecht zur Fahrtrichtung 14 überragt und möglichst nah am Boden angeordnet ist. Die Vorrichtungen 43, 45 sind auf dem Bürstenkopf 13, 15 unzweifelhaft stärkeren Vibrationen ausgesetzt, als bei einer Anordnung am Gehäuse 3 einer Bodenreinigungsmaschine der Fall wäre. In der Summe überwiegen jedoch die Vorteile der bodennahen Anordnung der Vorrichtungen 43, 45.

Das Ausführungsbeispiel des erfindungsgemäßen Bodenreinigungsroboters 1 wurde mit Bezug auf eine Bodenreinigungsmaschine beschrieben, die alternativ zum autonomen Fahren auch von einer Person bedient werden kann, die hinter der Bodenreinigungsmaschine her geht. Die Erfindung ist jedoch nicht auf derartige Bodenreinigungsmaschinen beschränkt. Es kann ohne weiteres auch auf Bodenreinigungsmaschinen ausgedehnt werden, auf denen der Bediener sitzt oder steht bzw. mitfährt also insbesondere Aufsitzmaschinen.

## Patentansprüche

1. Bodenreinigungsroboter (1) mit einem Gehäuse (3),
mit einem Fahrwerk (5) mit einem Antrieb zur Bewegung des Bodenreinigungsroboters in einer Fahrtrichtung (14) über eine zu reinigende Oberfläche (8),
mit einer Reinigungseinrichtung (11), die eingerichtet ist, mit der zu reinigenden Oberfläche (8) einzugreifen,
mit einer Steuereinheit (23) und
mit einer ersten Messvorrichtung (29) zur dreidimensionalen Abstandsmessung, die dazu eingerichtet ist, den Abstand der ersten Messvorrichtung (29) von einer Vielzahl von Oberflächenelementen innerhalb eines ersten Raumwinkels (33) zu erfassen, der ausgehend von der ersten Messvorrichtung (29) aufgespannt wird,
wobei die Steuereinheit (23) dazu eingerichtet ist, den Bodenreinigungsroboter (1) mit Hilfe einer Darstellung der zu reinigende Oberfläche (8) über die zu reinigende Oberfläche (8) zu führen und die zu reinigende Oberfläche (8) zu reinigen,
**dadurch gekennzeichnet,**
**dass** eine zweite Messvorrichtung (31) zur dreidimensionalen Abstandsmessung vorgesehen ist, die dazu eingerichtet ist, den Abstand der zweiten Messvorrichtung (31) von einer Vielzahl von Oberflächenelementen innerhalb eines zweiten Raumwinkels (35) zu erfassen, der ausgehend von der zweiten Messvorrichtung (31) aufgespannt wird,
**dass** die erste Messvorrichtung (29) und die zweite Messvorrichtung (31) derart ausgerichtet sind, dass die Fahrtrichtung (14) durch den ersten Raumwinkel (33) verläuft und der zweite Raumwinkel (35) versetzt zu dem ersten Raumwinkel (33) ist, und
**dass** die Steuereinheit (23) dazu ausgestaltet ist, die Darstellung der zu reinigenden Oberfläche (8) aufgrund der mit den Messvorrichtungen (29, 31) erfassten Abstände von Oberflächenelementen zu generieren und/oder zu aktualisieren.

2. Bodenreinigungsroboter (1) nach Anspruch 1, **dadurch gekennzeichnet, dass** die Reinigungseinrichtung (11) das Gehäuse (3) senkrecht zur Fahrtrichtung (14) und parallel zu der zu reinigenden Oberfläche (8) zu einer ersten Seite (12) hin überragt oder mit diesem abschließt und
dass die zweite Messvorrichtung (31) derart ausgerichtet ist, dass der zweite Raumwinkel (35) auf der von der ersten Seite (12) wegweisenden Seite des Bodenreinigungsroboters (1) liegt, außerhalb von dessen Fahrspur (36) angeordnet ist und die Fahrspur (36) den zweiten Raumwinkel (35) nicht schneidet.

3. Bodenreinigungsroboter (1) nach Anspruch 1 oder 2, **dadurch gekennzeichnet, dass** die erste und die zweite Messvorrichtung (29, 31) eine Lichtquelle, eine Kamera und eine Auswertungseinrichtung aufweisen,
dass die Lichtquelle Licht mit einer Wellenlänge in einem Bereich zwischen 780 nm und 3.000 nm emittiert und innerhalb des Raumwinkels (33, 35) angeordnete Oberflächenelemente mit einem Raster beleuchtet,
dass die Kamera innerhalb des Raumwinkels (33, 35) von den Oberflächenelementen reflektiertes Licht aufzeichnet, das von der Lichtquelle emittiert worden ist, und
dass die Auswertungseinrichtung dazu eingerichtet ist, aus dem von den Oberflächenelementen reflektierten Raster den Abstand der Messvorrichtung (29, 31) zu den Oberflächenelementen zu bestimmen.

4. Bodenreinigungsroboter (1) nach Anspruch 3, **dadurch gekennzeichnet, dass** die Lichtquelle der ersten Messvorrichtung (29) und die Lichtquelle der zweiten Messvorrichtung (31) gepulst sind und
dass die Lichtquelle der ersten Messvorrichtung (29) mit der Lichtquelle der zweiten Messvorrichtung (31) derartig korreliert ist, dass die Lichtquelle der ersten Messvorrichtung (29) dann kein Licht emittiert, wenn die Lichtquelle der zweiten Messvorrichtung (31) Licht emittiert.

5. Bodenreinigungsroboter (1) nach einem der vorhergehenden Ansprüche, **dadurch gekennzeichnet, dass** der erste und der zweite Raumwinkel (33, 35) horizontal zueinander benachbart sind und nicht überlappen.

6. Bodenreinigungsroboter (1) nach einem der vorhergehenden Ansprüche, **dadurch gekennzeichnet, dass** die Reinigungseinrichtung (11) zumindest teilweise in Fahrtrichtung (14) vor dem Gehäuse (3) angeordnet ist und
dass die Reinigungseinrichtung (11) eine Abdeckung (15) aufweist, die das Gehäuse (3) parallel zu einer zu reinigenden Oberfläche (8) in der Fahrtrichtung (14) und/oder senkrecht zu der Fahrtrichtung (14) überragt.

7. Bodenreinigungsroboter (1) nach Anspruch 6, **dadurch gekennzeichnet, dass** die Reinigungseinrichtung (11) unterhalb der Abdeckung (15) eine oder mehrere rotierende Reinigungsbürsten aufweist.

8. Bodenreinigungsroboter (1) nach Anspruch 6 oder 7, **dadurch gekennzeichnet, dass** eine auf der Abdeckung (15) angeordnete Unterfahrschutzvorrichtung (41) vorgesehen ist,
dass die Unterfahrschutzvorrichtung (41) eine Vorrichtung zur Abstandsmessung (49) aufweist, mit der der Abstand der Unterfahrschutzvorrichtung (41) zu einem Oberflächenelement erfasst werden kann, das sich in Fahrtrichtung (14) vor dem Gehäuse (3) des Bodenreinigungsroboters (1) befindet, und
dass die Unterfahrschutzvorrichtung (41) dazu eingerichtet ist, ein Stoppsignal an die Steuereinheit (23) zu senden.

9. Bodenreinigungsroboter (1) nach Anspruch 8, **dadurch gekennzeichnet, dass** der Messbereich der Vorrichtung zur Abstandsmessung (49) im Wesentlichen senkrecht zu der zu reinigenden Oberfläche (8) ausgerichtet ist.

10. Bodenreinigungsroboter (1) nach Anspruch 8 oder 9, **dadurch gekennzeichnet, dass** die Vorrichtung zur Abstandsmessung (49) der Unterfahrschutzvorrichtung (41) ein Ultraschallsensor oder ein Infrarotsensor ist.

11. Bodenreinigungsroboter (1) nach einem der Ansprüche 8 bis 10, **dadurch gekennzeichnet, dass** mit der Unterfahrschutzvorrichtung (41) der Abstand eines Oberflächenelementes erfasst werden kann, das bei einer Annäherung des Bodenreinigungsroboters (1) zumindest zeitweise innerhalb eines Bereiches des ersten oder zweiten Raumwinkels (33, 35) angeordnet ist, in dem der Abstand zu der ersten oder zweiten Messvorrichtung (29, 31) geringer ist als ein Mindestabstand, den die erste oder zweite Messvorrichtung (29, 31) bestimmen kann.

12. Bodenreinigungsroboter (1) nach einem der Ansprüche 6 bis 11, **dadurch gekennzeichnet, dass** der Bodenreinigungsroboter (1) eine oder mehrere Seitenabstandsmessungsvorrichtungen (43, 45) aufweist, die auf der Abdeckung (15) des Reinigungseinrichtung (11) angeordnet sind, und
jede Seitenabstandsmessungsvorrichtung (43, 45) einen Abstand der Reinigungseinrichtung (11) senkrecht zur Fahrtrichtung (14) und parallel zu der zu reinigenden Oberfläche (8) von einem Oberflächenelement bestimmen kann.

13. Bodenreinigungsroboter (1) nach einem der vorhergehenden Ansprüche, **dadurch gekennzeichnet, dass** der Bodenreinigungsroboter (1) ein Gyroskop (37) aufweist, und
dass mit dem Gyroskop (37) eine Drehung des Bodenreinigungsroboters (1) um eine Achse erfasst werden kann, die senkrecht zu der zu reinigenden Oberfläche (8) verläuft.

14. Bodenreinigungsroboter (1) nach einem der vorhergehenden Ansprüche, **dadurch gekennzeichnet, dass** das Fahrwerk (5) einen Encoder (39) aufweist, mit dem die zurückgelegte Wegstrecke ermittelt werden kann.

15. Bodenreinigungsroboter (1) nach Ansprüche 14, sofern abhängig von Anspruch 13, wobei die Steuereinheit (23) dazu eingerichtet ist, eine Position des Bodenreinigungsroboters (1) in der Darstellung der zu reinigenden Oberfläche (8) anhand von mit dem Gyroskop (37) erfassten Drehungen und mit dem Encoder (39) ermittelten Wegstrecken zu bestimmen.

## Claims

1. Floor-cleaning robot (1), comprising a housing (3),
a chassis (5) with a drive for moving the floor-cleaning robot in a direction of travel (14) over a surface (8) to be cleaned,
a cleaning means (11), which is adapted to engage with the surface (8) to be cleaned,
a control unit (23), and
a first measuring device (29) for three-dimensional distance measurement, which is adapted to sense the distance of the first measuring device (29) from a plurality of surface elements within a first solid angle (33) that is spanned from the first measuring device (29),
wherein the control unit (23) is adapted to guide the floor-cleaning robot (1) over the surface (8) to be cleaned, by means of a representation of the surface (8) to be cleaned, and to clean the surface (8) to be cleaned,
**characterized in that**
a second measuring device (31) for three-dimensional distance measurement is provided, which is adapted to sense the distance of the second measuring device (31) from a plurality of surface elements within a second solid angle (35) that is spanned from the second measuring device (31),
the first measuring device (29) and the second measuring device (31) are aligned in such a manner that the direction of travel (14) runs through the first solid angle (33), and the second solid angle (35) is offset in relation to the first solid angle (33), and
the control unit (23) is designed to generate and/or update the representation of the surface (8) to be cleaned on the basis of the distances from surface elements sensed by means of the measuring devices (29, 31).

2. Floor-cleaning robot (1) according to claim 1, **characterized in that** the cleaning means (11) projects beyond the housing (3), towards a first side (12), perpendicularly in relation to the direction of travel (14) and parallelwise in relation to the surface (8) to be cleaned, or is flush with the same, and
the second measuring device (31) is aligned in such a manner that the second solid angle (35) is located on the side of the floor-cleaning robot (1) that faces away from the first side (12), is disposed outside of the travel path (36) of the floor cleaning robot (1), and the travel path (36) does not intersect the second solid angle (35).

3. Floor-cleaning robot (1) according to claim 1 or 2, **characterized in that** the first and the second measuring device (29, 31) comprise a light source, a camera and an evaluation means,
the light source emits light having a wavelength in a range of between 780 nm and 3000 nm, and illuminates, with a matrix, surface elements that are disposed within the solid angle (33, 35),
the camera records light that has been emitted by the light source and that is reflected by the surface elements within the solid angle (33, 35), and
the evaluation means is adapted to determine, from the matrix reflected by the surface elements, the distance of the measuring device (29, 31) from the surface elements.

4. Floor-cleaning robot (1) according to claim 3, **characterized in that** the light source of the first measuring device (29) and the light source of the second measuring device (31) are pulsed, and
the light source of the first measuring device (29) is correlated with the light source of the second measuring device (31) in such a manner that the light source of the first measuring device (29) does not emit any light when the light source of the second measuring device (31) emits light.

5. Floor-cleaning robot (1) according to one of the preceding claims, **characterized in that** the first and the second solid angle (33, 35) are horizontally adjacent to each other and do not overlap.

6. Floor-cleaning robot (1) according to one of the preceding claims, **characterized in that** the cleaning means (11) is disposed at least partially in the direction of travel (14) in front of the housing (3), and
the cleaning means (11) has a cover (15), which projects beyond the housing (3), parallelwise in relation to a surface (8) to be cleaned, in the direction of travel (14) and/or perpendicularly in relation to the direction of travel (14).

7. Floor-cleaning robot (1) according to claim 6, **characterized in that** the cleaning means (11) comprises one or more rotating cleaning brushes beneath the cover (15).

8. Floor-cleaning robot (1) according to claim 6 or 7, **characterized in that** an under-run protection device (41) is provided, disposed on the cover (15),
the under-run protection device (41) comprises a distance measuring device (49), by means of which the distance of the under-run protection device (41) in relation to a surface element, located in the direction of travel (14) in front of the housing (3) of the floor-cleaning robot (1), can be sensed, and
the under-run protection device (41) is adapted to transmit a stop signal to the control unit (23).

9. Floor-cleaning robot (1) according to claim 8, **characterized in that** that the measurement region of the distance measuring device (49) is aligned substantially perpendicularly in relation to the surface (8) to be cleaned.

10. Floor-cleaning robot (1) according to claim 8 or 9, **characterized in that** the distance measuring device (49) of the under-run protection device (41) is an ultrasonic sensor or an infrared sensor.

11. Floor-cleaning robot (1) according to one of claims 8 to 10, **characterized in that** the under-run protection device (41) can sense the distance of a surface element that, as the floor-cleaning robot (1) approaches, is disposed, at least temporarily, within a region of the first or second solid angle (33, 35) in which the distance in relation to the first or second measuring device (29, 31) is less than a minimum distance that can be determined by the first or second measuring device (29, 31).

12. Floor-cleaning robot (1) according to one of claims 6 to 11, **characterized in that** the floor-cleaning robot (1) comprises one or more lateral distance measuring devices (43, 45), which are disposed on the cover (15) of the cleaning means (11), and
each lateral distance measuring device (43, 45) can determine a distance of the cleaning means (11) from a surface element, perpendicularly in relation to the direction of travel (14) and parallelwise in relation to the surface (8) to be cleaned.

13. Floor-cleaning robot (1) according to one of the preceding claims, **characterized in that** the floor-cleaning robot (1) comprises a gyroscope (37), and
the gyroscope (37) can sense a rotation of the floor-cleaning robot (1) about an axis running perpendicularly in relation to the surface (8) to be cleaned.

14. Floor-cleaning robot (1) according to one of the preceding claims, **characterized in that** the chassis (5) comprises an encoder (39), by means of which the distance travelled can be determined.

15. Floor-cleaning robot (1) according to claim 14, insofar as dependent on claim 13, wherein the control unit (23) is adapted to determine a position of the floor-cleaning robot (1) in the representation of the surface (8) to be cleaned, on the basis of rotations sensed by means of the gyroscope (37) and distances determined by means of the encoder (39).

## Revendications

1. Robot de nettoyage de sol (1) avec un boîtier (3),
avec un train de roulement (5) avec un entraînement pour le déplacement du robot de nettoyage de sol dans une direction de déplacement (14) au-dessus d'une surface à nettoyer (8),
avec un dispositif de nettoyage (11) conçu pour adhérer à la surface à nettoyer (8),
avec une unité de commande (23) et
avec un premier dispositif de mesure (29) pour une mesure de distance tridimensionnelle, conçu pour mesurer la distance entre le premier dispositif de mesure (29) et une pluralité d'éléments de surface, à l'intérieur d'un premier angle solide (33) qui part du premier dispositif de mesure (29),
l'unité de commande (23) étant conçue de façon à guider le robot de nettoyage de sol (1), à l'aide d'une représentation de la surface à nettoyer (8), au-dessus de la surface à nettoyer (8) et à nettoyer la surface à nettoyer (8), **caractérisé en ce que**
un deuxième dispositif de mesure (31) pour une mesure de distance tridimensionnelle est prévu, qui est conçu pour mesurer la distance entre le deuxième dispositif de mesure (31) et une pluralité d'éléments de surface à l'intérieur d'un deuxième angle solide (35) qui part du deuxième dispositif de mesure (31),
le premier dispositif de mesure (29) et le deuxième dispositif de mesure (31) sont conçus de façon à ce que la direction de déplacement (14) traverse le premier angle solide (33) et le deuxième angle solide (35) est décalé par rapport au premier angle solide (33) et
l'unité de commande (23) est conçue pour générer et/ou actualiser la représentation de la surface à nettoyer (8) sur la base des distances, déterminées avec les dispositifs de mesures (29, 31), par rapport aux éléments de surface.

2. Robot de nettoyage de sol (1) selon la revendication 1, **caractérisé en ce que** le dispositif de nettoyage (11) dépasse du boîtier (3) perpendiculairement à la direction de déplacement (14) et parallèlement à la surface à nettoyer (8), vers un premier côté (12), ou se termine avec celui-ci et
**en ce que** le deuxième dispositif de mesure (31) est conçu de façon à ce que le deuxième angle solide (35) est disposé sur le côté du robot de nettoyage de sol (1) opposé au premier côté (12), à l'extérieur de sa trajectoire de déplacement (36) et la trajectoire de déplacement (36) ne coupe pas le deuxième angle solide (35).

3. Robot de nettoyage de sol (1) selon la revendication 1 ou 2, **caractérisé en ce que** le premier et le deuxième dispositif de mesure (29, 31) comprennent une source de lumière, une caméra et un dispositif d'analyse,
**en ce que** la source de lumière émet une lumière avec une longueur d'onde entre 780 nm et 3000 nm et éclaire les éléments de surface disposé à l'intérieur de l'angle solide (33, 35) avec une trame,
**en ce que** la caméra enregistre la lumière réfléchie à l'intérieur de l'angle solide (33, 35) par les éléments de surface, qui est émise par la source de lumière et
**en ce que** le dispositif d'analyse est conçu pour déterminer, à partir de la trame réfléchie par les éléments de surface, la distance entre le dispositif de mesure (29, 31) et les éléments de surface.

4. Robot de nettoyage de sol (1) selon la revendication 3, **caractérisé en ce que** la source de lumière du premier dispositif de mesure (29) et la source de lumière du deuxième dispositif de mesure (31) sont pulsées et
**en ce que** la source de lumière du premier dispositif de mesure (29) est corrélée avec la source de lumière du deuxième dispositif de mesure (31) de façon à ce que la source de lumière du premier dispositif de mesure (29) ne puisse pas émettre de lumière lorsque que la source de lumière du deuxième dispositif de mesure (31) émet de la lumière.

5. Robot de nettoyage de sol (1) selon l'une des revendications précédentes, **caractérisé en ce que** le premier et le deuxième angle solide (33, 35) sont horizontalement voisins l'un de l'autre et ne se superposent pas.

6. Robot de nettoyage de sol (1) selon l'une des revendications précédentes, **caractérisé en ce que** le dispositif de nettoyage (11) est disposé au moins partiellement avant le boîtier (3) dans la direction de déplacement et
**en ce que** le dispositif de nettoyage (11) comprend une protection (15) qui dépasse le boîtier parallèlement à une surface à nettoyer (8) dans la direction de déplacement (14) et/ou perpendiculairement à la direction de déplacement.

7. Robot de nettoyage de sol (1) selon la revendication 6, **caractérisé en ce que** le dispositif de nettoyage (11) comprend, en dessous de la protection (15), une ou plusieurs brosses rotatives.

8. Robot de nettoyage de sol (1) selon la revendication 6 ou 7, **caractérisé en ce qu'**un dispositif anti-encastrement (41) est prévu sur la protection (15),
**en ce que** le dispositif anti-encastrement (41) comprend un dispositif de mesure de distance (49) permettant de mesurer la distance entre le dispositif anti-encastrement (41) et un élément de surface qui se trouve devant le boîtier (3) du robot de nettoyage de sol (1), dans la direction de déplacement (14) et
**en ce que** le dispositif anti-encastrement (41) est conçu pour envoyer un signal d'arrêt à l'unité de commande (23) ;

9. Robot de nettoyage de sol (1) selon la revendication 8, **caractérisé en ce que** la zone de mesure du dispositif de mesure de distance (49) est sensiblement perpendiculaire à la surface à nettoyer (8).

10. Robot de nettoyage de sol (1) selon la revendication 8 ou 9, **caractérisé en ce que** le dispositif de mesure de distance (49) du dispositif anti-encastrement (41) est un capteur à ultrasons ou un capteur à infrarouge.

11. Robot de nettoyage de sol (1) selon l'une des revendications 8 à 10, **caractérisé en ce que** le dispositif anti-encastrement (41) permet de mesurer la distance entre un élément de surface qui se trouve, lorsque le robot de nettoyage de sol (1) se rapproche au moins temporairement à l'intérieur d'une zone du premier ou du deuxième angle solide (33, 35), dans laquelle la distance par rapport au premier ou au deuxième dispositif de mesure (29, 31) est inférieure à une distance minimale que le premier ou le deuxième dispositif de mesure (29, 31) permet de déterminer.

12. Robot de nettoyage de sol (1) selon l'une des revendications 6 à 11, **caractérisé en ce que** le robot de nettoyage de sol (1) comprend un ou plusieurs dispositifs de mesure de distance latérale (43, 45) qui se trouvent sur la protection (15) du dispositif de nettoyage (11) et
chaque dispositif de mesure de distance latérale (43, 45) permet de déterminer une distance du dispositif de nettoyage (11) perpendiculairement à la direction de déplacement (14) et parallèlement à la surface à nettoyer (8) par rapport à un élément de surface.

13. Robot de nettoyage de sol (1) selon l'une des revendications précédentes, **caractérisé en ce que** le robot de nettoyage de sol (1) comprend un gyroscope (37) et
**en ce que** le gyroscope (37) permet de mesurer une rotation du robot de nettoyage de sol (1) autour d'un axe qui est perpendiculaire à la surface à nettoyer (8).

14. Robot de nettoyage de sol (1) selon l'une des revendications précédentes, **caractérisé en ce que** le train de roulement (5) comprend un codeur (39) permettant de déterminer le trajet parcouru.

15. Robot de nettoyage de sol (1) selon la revendication 14, dans la mesure où elle dépend de la revendication 13, l'unité de commande (23) étant conçue de façon à pouvoir déterminer une position du robot de nettoyage de sol (1) dans la représentation du sol à nettoyer (8) à l'aide des rotations mesurées avec le gyroscope (37) et avec les trajets déterminés avec le codeur (39).
